(19) Europäisches Patentamt
European Patent Office
Office européen des brevets

(11) **EP 2 448 137 A1**

(12) **EUROPEAN PATENT APPLICATION**
published in accordance with Art. 153(4) EPC

(43) Date of publication:
**02.05.2012 Bulletin 2012/18**

(51) Int Cl.:
***H04B 7/04*** *(2006.01)*  ***H04W 28/06*** *(2009.01)*

(21) Application number: **09846354.0**

(86) International application number:
**PCT/CN2009/072406**

(22) Date of filing: **23.06.2009**

(87) International publication number:
**WO 2010/148554 (29.12.2010 Gazette 2010/52)**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(71) Applicant: **Alcatel Lucent**
**75007 Paris (FR)**

(72) Inventors:
• **LUO, Qinglin**
  **Shanghai 201206 (CN)**

• **SHI, Jing**
  **Shanghai 201206 (CN)**

(74) Representative: **Behrens, Ralf Erik**
**Dreiss Patentanwälte**
**Postfach 10 37 62**
**70032 Stuttgart (DE)**

(54) **METHOD AND DEVICE FOR SIGNAL TRANSMISSION IN TIME-DIVISION DUPLEX MIMO SYSTEM**

(57) The present invention relates to methods of transmitting a signal in a time division duplexing MIMO system and associated apparatuses. According to a first aspect of the present invention, there is provided a method of transmitting a signal in an eNodeB of a time division duplexing multiple input multiple output system. The method includes: A. receiving a signal from a user equipment in a space division multiplexing group and estimating uplink channel characteristics according to the received signal; B. determining reciprocity calibration information between the uplink channel characteristics and downlink channel characteristics; C. determining a downlink precoding matrix using zero forcing according to the uplink channel characteristics and the calibration information and transmitting a downlink signal to the user equipment in the space division multiplexing group according to the determined downlink precoding matrix. And the step B further comprises receiving information associated with a downlink vector channel matrix fed back from the user equipment in the space division multiplexing group and selectively updating the calibration information according to the information associated with the downlink vector channel matrix.

Fig. 4

## Description

### FIELD OF THE INVENTION

The present invention relates to communication technologies, and more particularly, to methods and apparatuses of transmitting a signal in a time division duplexing MIMO system.

### BACKGROUND OF THE INVENTION

In a time division duplexing (TDD) system, uplink signals and downlink signals occupy different time slots at the same frequency band. Theoretically, there is reciprocity between an uplink channel and a downlink channel within a correlation time. In prior art, it commonly takes advantage of such reciprocity and estimates downlink channel characteristics according to uplink channel characteristics. However, in a practical TDD system, there are some reciprocity errors between an uplink channel and a downlink channel. One of the key concerns about TDD reciprocity based multiple-input multiple-output system is that the system performance is highly sensitive to uplink-downlink channel reciprocity errors. Any slight reciprocity errors may cause significant performance degradation. Therefore, more and more attention is being paid to uplink-downlink channel reciprocity calibration in a TDD system.

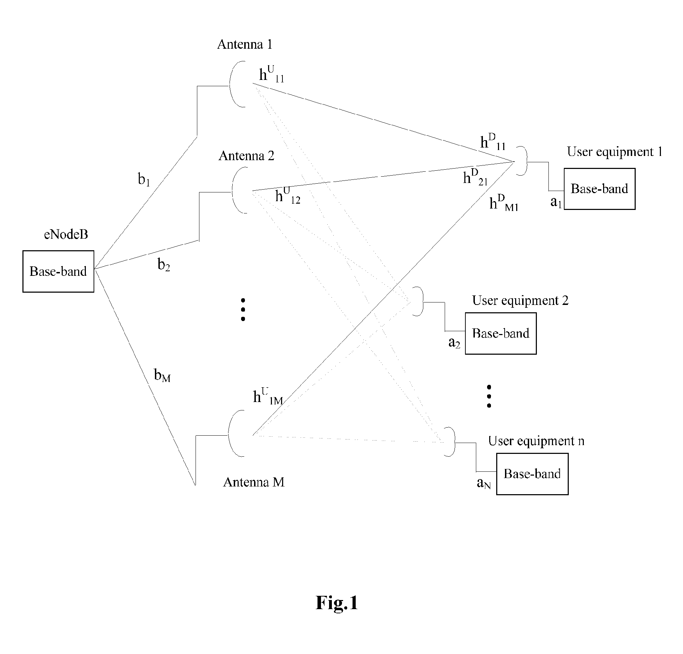

3GPP proposal R1-080494 provides an over-the-air scheme for calibrating the baseband-to-baseband non-reciprocity. FIG. 1 is a schematic diagram illustrating an air interface of the proposal. The eNodeB is configured to have M antennas, where the i-th antenna has a transmission mismatch of $T_i$ and a reception mismatch of $\rho_i$. And an effective mismatch of the i-th antenna is defined as $\beta_i = T_i/\rho_i$. The system includes N user equipments, where the j-th user equipment has a transmission mismatch of $\sigma_j$ and a reception mismatch of $\pi_j$. And an effective mismatch of the j-th user equipment is defined as $\alpha_j = \pi_j/\sigma_j$. The overall procedure of channel reciprocity calibration is as follows:

1) The eNodeB decides that it needs calibration, and selects user equipments with strong channel quality indicators (CQIs) and relatively low Doppler shift for calibration;
2) The eNodeB sends messages to the N user equipments to enter calibration mode;
3) The j-th user equipment measures a cell specific reference signal (closest to the next sounding reference signal (SRS) on uplink, accounting for processing time), and reports back the channel from the i-th antenna of the eNodeB using a 6 bit I/Q quantization, along with transmitting an SRS on uplink at the same time.
4) For the i-th (i = 1, 2,..., M) antenna of the eNodeB, the calibration factor ci is calculated, where $c_i = T_i h^D_{ij} \Pi_i / \sigma_j h^U_{jj}\rho_j = \beta_i\alpha_j$. A minimum mean square error (MMSE) estimation can be done as well.
5) The effective calibration factor of the j-th user equipment is found as $C_j = (1, \beta_2/\beta_1 ..., \beta M/\beta_1)$
6) C = f(C1, C2, ..., CN) is found by averaging/MMSE estimation.
7) The eNodeB exits the calibration mode if it is satisfied with the calibration.

In this proposal, 6 I/Q modulation bits are needed to feedback a downlink channel estimating sample, which may lead to prohibitive overhead. For example, if downlink channel estimating is done on 24 sub-carriers in an 8×2 MIMO system, the calibration overhead for each user equipment is 2304 bits (6×24×8×2 = 2304), which occupy several air interface symbols. Since the reciprocity is triggered by channel quality estimation, it is very likely that uplink transmission may be blocked by calibration data under poor channels.

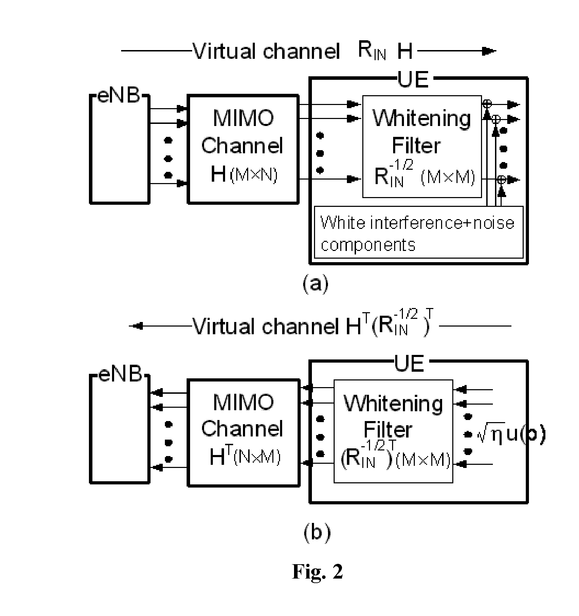

3GPP proposal R1-090042 provides another over-the-air scheme for calibrating non-reciprocal interferenece. FIG. 2 is a schematic diagram illustrating an air interface of the proposal. The procedure in the scheme is described briefly as follows:

1) A user equipment measures $R_{IN}$ according to its received (downlink) interference-plus-noise vector;
2) The use equipment transmits M pilot signals precoded by $R_{IN}$ and scaled by a factor η signaled from the eNodeB;
3) The eNodeB receives the pilot signals and estimates the precoded channel corrupted by uplink noise plus interference, and approximates the downlink channel with the estimation;
4) The eNodeB performs downlink precoding according to the precoded uplink channel (virtual channel).

The drawbacks of the scheme include: i) it can only calibrate non-reciprocal interferences; ii) the eNodeB can only measure a weighted channel instead of the real uplink channel, which may result in unpredictable incapability; iii) setting of the power factor η requires the knowledge of the real uplink interference-plus-noise, which is not actually obtainable; iv) power factor η is designed to increase uplink signal power so as to increase signal to interference and noise ratio (SINR), but it may also increase interference to other users. Whether or not the final SINR is increased depends on rigorous system simulations, which are still in absence.

## SUMMARY OF THE INVENTION

Generally, reciprocity errors of a TDD system may come from three aspects:

1) different transmitting/receiving RF circuits;
2) different interference profiles at the user side and at the eNodeB side;
3) systematic differences between uplink and downlink baseband-to-baseband channels due to different frequency sub-bands, different channel estimating algorithms, Doppler shift, etc.

In a multi-user MIMO (MU-MIMO) system, downlink transmission is of most interest because in the downlink the eNodeB has the access to all users' channel information and can arrange the transmission most effectively by performing proper precoding. The system model of a MU-MIMO system is discussed hereinafter.

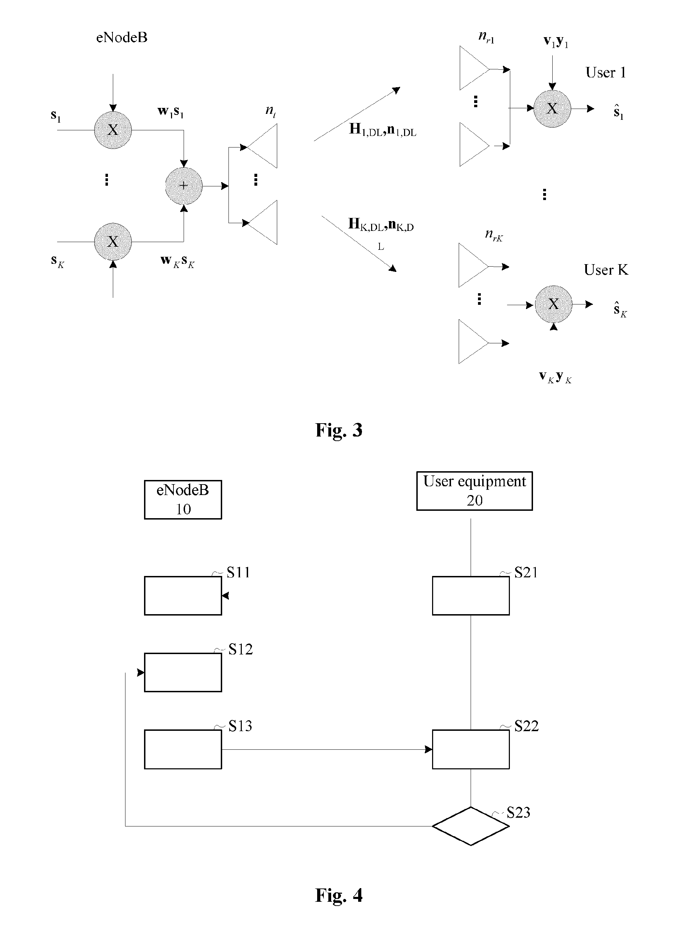

FIG. 3 illustrates a typical downlink MU-MIMO system, where $s_k$ and $n_k$ denote the k-th transmitted symbol vector and the additive white Gaussian noise vector, respectively. The actual transmitted signal vector for the k-th user is then given by $w_k s_k$, where $w_k$ denotes the precoding vector for the k-th user. This variable is a matrix if the user equipment receives a plurality of data streams. The eNodeB serves K selected uncorrelated users (usually selected from all active users by a scheduling device) and each user is equipped with $n_{r,k}$ uncorrelated antennas (thus able to receive up to $n_{r,k}$ data streams).

The received signal vector at the k-th user is

The goal of linear precoding is to design $\mathbf{W} = [\mathbf{w}_1, \mathbf{w}_2, ..., \mathbf{w}_k]$ based on the full channel matrix

$$\mathbf{H} = [\mathbf{H}_1^T, \mathbf{H}_2^T, ..., \mathbf{H}_K^T]^T$$ so that $\mathbf{HW}$ is diagonal, i.e., $\mathbf{H}_i \mathbf{w}_j = \mathbf{0}$ for $i \neq j$.

In a MIMO system, precoding may be utilized to realize space division multiplexing among multiple user equipments, thereby increase overall throughput of the system. Zero-Forcing (ZF) precoding is a well recognized precoder design technique for downlink MU-MIMO system. The main benefit of ZF precoding is that the interference is pre-canceled at the transmitter-side. This implies that the eNodeB endures most of the computational complexity in designing the precoder, and each terminal only needs to receive information regarding its own data streams.

The ZF precoder can be designed using the Moore-Penrose pseudo-inverse, which is represented by:

$$\mathbf{W}^T = \mathbf{H}_{UL}^+ = \mathbf{H}_{UL}^H (\mathbf{H}_{UL} \mathbf{H}_{UL}^H)^{-1},$$

where '+' denotes the pseudo-inverse operation. The signals received by the users can be written as

$$\mathbf{y} = \mathbf{H}_{DL} \mathbf{WS} + \mathbf{N}.$$

Signals seen by user i actually experienced a virtual vector channel $\mathbf{H}_i \mathbf{W}$, which is estimatable if all reference signals are orthogonal. For a TDD system with perfect reciprocity, the precoded matrix channel as seen by all users would be $\mathbf{H}_{DL} \mathbf{w} = \mathbf{H}_{DL} \mathbf{H}_{UL}^+ = \mathbf{I}$ i.e., a unitary diagonal channel.

However, imperfect reciprocity is usually the case for practical TDD systems, which results in a non-diagonal precoded channel. A calibration matrix $\mathbf{E}$ is introduced to denote reciprocity errors between the uplink and downlink channels. In other words, the downlink channel may be expressed as $\mathbf{H}_{DL} = \mathbf{E} \mathbf{H}_{UL}^T$ Given the dimension of the downlink channel matrix is $n_r \times n_t$ or the dimension of the uplink channel matrix is $n_t \times n_r$, the dimension of the calibration matrix $\mathbf{E}$ is $n_r \times n_r$. Then with ZF precoding, the effective downlink matrix channel would be

$$\mathbf{H'}_{DL} = \begin{bmatrix} \mathbf{H'}_{1,DL} \\ ... \\ \mathbf{H'}_{n_r,DL} \end{bmatrix} = \mathbf{H}_{DL}\mathbf{W} = \mathbf{E}\mathbf{H}_{UL}^{T}(\mathbf{H}_{UL}^{+})^{T} = \mathbf{E},$$

where $\mathbf{H'}_{i,DL} = [\mathbf{h'}_{i,1},...,\mathbf{h'}_{i,nr}]$ denotes the vector channel as seen by user i. The above equation suggests that the downlink matrix channel estimated by users can be fed back to the eNodeB for reciprocity calibration, e.g., for assuring that the precoding is based on a precisely predicted downlink channel.

Theoretically, the calibration matrix **E** can be either a left or a right multiplier. If the calibration matrix **E** is a left multiplier, the matrix can be estimated by separate downlink receivers without exchanging information. Another benefit is that the dimension of the left multiplier is also the number of receiving antennas. In an MU-MIMO system, the number of receiving antennas is usually limited by the number of transmitting antennas, i.e., $n_r \leq n_t$. Therefore, the number of entries of the calibration matrix **E** would not exceed the number of entries of the channel matrix. With the same feedback manner, feeding back the effective downlink vector channel leads to less feedback overhead as compared with feeding back the channel matrix in the 3GPP proposal R1-080494.

In the context of LTE-A, it has been agreed that reference signals (RS) targeting at data demodulation are orthogonal for each user equipment and subject to the same precoding operation with the data. In addition, the RSs for different layers should be orthogonal. These agreements enable user i to estimate and feedback the vector channel $\mathbf{H'}_{i,DL}$.

According to a first aspect of the present invention, there is provided a method of transmitting a signal in an eNodeB of a time division duplexing multiple input multiple output system. The method includes: A. receiving a signal from a user equipment in a space division multiplexing group and estimating uplink channel characteristics according to the received signal; B. determining reciprocity calibration information between the uplink channel characteristics and downlink channel characteristics; C. determining a downlink precoding matrix using zero forcing according to the uplink channel characteristics and the calibration information and transmitting a downlink signal to the user equipment in the space division multiplexing group according to the determined downlink precoding matrix. And the step B further comprises receiving information associated with a downlink vector channel matrix fed back from the user equipment in the space division multiplexing group and selectively updating the calibration information according to the information associated with the downlink vector channel matrix.

According to a second aspect of the present invention, there is provided a method of assisting an eNodeB to transmit a signal in a user equipment of a time division duplexing multiple input multiple output system. The method includes: a. transmitting an uplink reference signal to the eNodeB for uplink channel estimation; b. receiving a downlink reference signal from the eNodeB for downlink channel estimating of a space division multiplexing group to which the user equipment pertains, and estimating a downlink vector channel matrix according to the received downlink reference signal; c. transmitting information associated with the estimated downlink vector channel matrix to the eNodeB for channel reciprocity calibration when the downlink vector channel matrix satisfies a predetermined condition.

According to a third aspect of the present invention, there is provided a signal transmitting apparatus for transmitting a signal in an eNodeB of a time division duplexing multiple input multiple output system. The apparatus includes: an uplink channel estimating means for receiving a signal from a user equipment in a space division multiplexing group and estimating uplink channel characteristics according to the received signal; a calibration information determining means for determining calibration information between the uplink channel characteristics and downlink channel characteristics; a precoding means for determining a downlink precoding matrix using zero forcing according to the uplink channel characteristics and the calibration information and transmitting a downlink signal to the user equipment in the space division multiplexing group according to the determined downlink precoding matrix. And the calibration information determining means is further utilized for receiving information associated with a downlink vector channel matrix fed back from the user equipment in the space division multiplexing group, and selectively updating the calibration information according to the information associated with the downlink vector channel matrix.

According to a fourth aspect of the present invention, there is provided an assisting apparatus for assisting an eNodeB to transmit a signal in a user equipment of a time division duplexing multiple input multiple output system. The apparatus includes: an uplink reference signal transmitting means for transmitting an uplink reference signal to the eNodeB for uplink channel estimation; a downlink vector channel estimating means for receiving a downlink reference signal from the eNodeB for downlink channel estimating by a space division multiplexing group to which the user equipment pertains, and estimating a downlink vector channel matrix according to the received downlink reference signal; a downlink vector channel transmitting means for transmitting information associated with the estimated downlink vector channel matrix to the eNodeB when the downlink vector channel matrix satisfies a predetermined condition.

With the methods and apparatuses of the present invention, multi-user space division multiplexing in a TDD MIMO system is realized. With the same feedback manner, calibration overhead needed in the methods and apparatuses of the present invention is reduced as compared with the 3GPP proposal R1-080494.

## BRIEF DESCRIPTION OF THE DRAWINGS

Other features, objectives and advantages of the present invention will become more apparent after reading the following detailed description of non-limiting embodiments, with reference to the accompanying drawings, wherein below:

FIG. 1 is a schematic diagram illustrating an air interface of a prior art over-the-air scheme for calibrating baseband-to-baseband non-reciprocity;
FIG. 2 is a schematic diagram illustrating an air interface channel of a prior art over-the-air scheme for calibrating air interface non-reciprocity;
FIG. 3 is a schematic diagram illustrating a typical downlink MU-MIMO system.
FIG. 4 is a flowchart illustrating a method of transmitting a downlink signal in a TDD MIMO system according to an embodiment of the present invention;
FIG. 5 is a structural block diagram illustrating an apparatus for transmitting a signal in an eNodeB of a TDD MIMO system according to an embodiment of the present invention;
FIG. 6 is a structural block diagram illustrating an apparatus for assisting an eNodeB to transmit a signal in a user equipment of a TDD MIMO system according to an embodiment of the present invention;

Identical or similar reference signs represent identical or similar step features or means (modules).

## DETAILED DESCRIPTION OF PREFERRED EMBODIMENTS

FIG. 4 is a flowchart illustrating a method of transmitting a downlink signal in a TDD MIMO system according to an embodiment of the present invention. The procedure of a method of the present invention is described hereinafter in connection with FIGS. 3 and 4.

As shown in FIG. 3, the MIMO system includes an eNodeB and K user equipments. The eNodeB performs precoding to realize space division multiplexing among the K user equipments. Therefore, the K user equipments compose a space division multiplexing group. The eNodeB includes $n_t$ antennas, and the j-th user equipment is equipped with $n_{rj}$ antennas. An eNodeB 10 shown in FIG. 4 corresponds to the eNodeB shown in FIG. 3, and a user equipment 20 shown in FIG. 4 corresponds to any of users 1 to K shown in FIG. 3. Methods according to a first aspect and a second aspect are described hereinafter in connection with signal processing procedure between the eNodeB 10 and the user equipment 20.

Firstly, in step S21, the user equipment 20 transmits an uplink reference signal to the eNodeB 10 for uplink channel estimation. Preferably, the uplink reference signal transmitted by the user equipment 20 is a sounding reference signal so that the eNodeB 10 may estimate the uplink channel between them both. Accordingly, other user equipments in the same space division multiplexing group perform an identical operation to that of the user equipment 20.

In step S11, the eNodeB 10 receives a signal from a user equipment in a space division multiplexing group, and estimates uplink channel characteristics according to the received signal. Preferably, the eNodeB 10 estimates a full uplink channel matrix according to signals (e.g., sounding reference signals) from all the user equipments in the space division multiplexing group.

Usually, before receiving a new uplink reference signal from a user equipment (e.g., the user equipment 20), the eNodeB 10 uses an uplink channel matrix estimated according to the last uplink reference signal.

Then in step S12, the eNodeB 10 determines reciprocity calibration information between the uplink channel characteristics and downlink channel characteristics.

Specifically, the above characteristics and information are expressed in a form of matrix. In other words, the uplink channel characteristics is expressed by an uplink channel matrix $\mathbf{H}_{UL}$, the downlink channel characteristics is expressed by a downlink channel matrix $\mathbf{H}_{DL}$, and the calibration information is expressed by a left multiplier matrix $\mathbf{E}$.

The calibration information, namely calibration matrix, $\mathbf{H}_{DL} = \mathbf{E}\mathbf{H}_{UL}^{T}$ satisfies In the initial stage of communication, the eNodeB 10 sets an initial calibration matrix. Preferably, the initial calibration matrix is set to be a unitary diagonal matrix. In the process of communication, the eNodeB 10 updates the calibration matrix according to feedback from user equipments in the space division multiplexing group.

Then in step S13, the eNodeB 10 determines a downlink precoding matrix using zero forcing according to the uplink channel characteristics and the calibration information and transmits a downlink signal to the user equipment in the space division multiplexing group according to the determined downlink precoding matrix.

Specifically, using a matrix expression, the eNodeB 10 determines a downlink channel matrix according to an uplink channel matrix and a calibration matrix, which is represented as $\mathbf{H}_{DL} = \mathbf{E}\mathbf{H}_{UL}^{T}$. Then, the eNodeB 10 designs precodes using zero forcing according to a calibrated uplink channel matrix to obtain a downlink precoding matrix $\mathbf{W}$, performs precoding according to the downlink precoding matrix $\mathbf{W}$, and transmits downlink signals to each user equipment in the space division multiplexing group. More specifically, the reference signals transmitted to different user equipments in the space division multiplexing group by the eNodeB 10 are mutually orthogonal, and precoding for the reference signals is identical to that for data signals.

The downlink precoding matrix $\mathbf{W}$ may be obtained by applying a Moore-Penrose pseudo-inverse to the calibrated uplink channel matrix, which is represented by $\mathbf{W} = (\mathbf{E}\mathbf{H}_{UL}^{T})^{+}$.

The downlink precoding matrix $\mathbf{W}$ may also be obtained by performing a minimum mean square estimation to the calibrated uplink channel matrix.

A person skilled in the art would understand that any designs of zero forcing precoding making $\mathbf{H}_{DL}\mathbf{W}$ a diagonal matrix may be employed in the present invention.

At the side of the user equipment, the downlink channel is estimated according to a signal from the eNodeB. In step S22, the user equipment 20 receives a downlink reference signal from the eNodeB 10 for downlink channel estimating of a space division multiplexing group to which the user equipment 20 pertains, and estimates a downlink vector channel matrix according to the received downlink reference signal. Specifically, the user equipment 20 receives and measures downlink reference signals of all users in the space division multiplexing group to which the user equipment 20 pertains to estimate the vector channel. The effective downlink channel matrix seen by all the user equipments of the space division multiplexing group may be represented as

$$\mathbf{H'}_{DL} = \begin{bmatrix} \mathbf{H}^{'}_{1,DL} \\ \cdots \\ \mathbf{H}^{'}_{n_r,DL} \end{bmatrix},$$

where $n_r$ represents total number of receiving antennas, or total number of independent data streams (if each receiving antenna corresponds to an independent data stream). Each row vector in the above effective downlink channel matrix is a vector channel seen in a perspective of a certain receiving antenna. For purposes of illustration instead of limitation, each user equipment in the space division multiplexing group is equipped with one antenna for receiving an independent data stream. If the user equipment 20 is the j-th user equipment in the group, the vector channel measured by the user equipment 20 may be represented by $\mathbf{H}^{'}_{j,DL} = [h^{'}_{j,1},...,h^{'}_{j,nr}]$. Other user equipments in the group perform identical operations to those of the user equipment 20, and measure their respective vector channel.

Then in step S23, the user equipment 20 makes a determination on whether its measured downlink vector channel matrix satisfies a predetermined condition. If the condition is satisfied, the user equipment 20 transmits information associated with the estimated downlink vector channel matrix to the eNodeB 10 for channel reciprocity calibration.

Specifically, the user equipment measures the vector channel to be $\mathbf{H}^{'}_{j,DL} = [h^{'}_{j,1},...,h^{'}_{j,n_r}]$. The condition of the determination may be either that an average power value of $\mathbf{H}^{'}_{j,DL} = [h^{'}_{j,1},...,h^{'}_{j,n_r}]$ exceeds a predetermined value or that an average of modes of the entries exceeds a predetermined value, meaning that the eNodeB 10 has so great channel calibration errors that signals transmitted to other users in the space division multiplexing group cause apparent interference to the user equipment 20. Therefore, the user equipment 20 feeds back the measured vector channel to the eNodeB 10 for channel reciprocity calibration. Optionally, the user equipment 20 transmits a request for re-calibration to the eNodeB 10. A person skilled in the art would understand that other predetermined conditions may be used by the user equipment 20 to determine whether it feeds back the vector channel and/or transmits the request for re-calibration to the eNodeB 10.

The user equipment 20 may feed back the downlink vector channel matrix $\mathbf{H}^{'}_{j,DL}$ in various manners. For example, the user equipment 20 may transmit to the eNodeB 10 an actual measured value of the downlink vector channel matrix. Alternatively, the user equipment 20 may transmit to the eNodeB 10 a variation of the downlink vector channel matrix, and the eNodeB 10 derives current vector channel according to the last vector channel and its variation. Alternatively again, the user equipment 20 may transmit to the eNodeB 10 a quantized value of the downlink vector channel matrix. Of course, the user equipment 20 may also employ other manners to feed back the calibration information. The dimension of the effective downlink channel matrix $\mathbf{H}^{'}_{DL}$ is limited to the total number of receiving antennas, and is

usually less than $n_r \times n_t$. Therefore, with the same feedback manner, calibration feedback overhead in the present invention is less than that in the 3GPP proposal R1-080494.

Identical operations are performed by other user equipments in the same space division multiplexing group to feed back their respective measured downlink vector channel matrix and/or transmit requests for re-calibration, which is omitted herein.

As mentioned above, in step S12 the eNodeB 10 determines reciprocity calibration matrix **E** between the uplink channel matrix and downlink channel matrix. In the process of communication, step S12 further includes receiving information associated with a downlink vector channel matrix fed back from the user equipment in the space division multiplexing group, and selectively updating the calibration information according to the information associated with the downlink vector channel matrix.

Specifically, the eNodeB 10 determines respective vector channel $\mathbf{H}'_{j,DL} = [h'_{j,1,...,} h'_{j,n_r}]$ according to information fed back from each user equipment in the space division multiplexing group; and decides whether to re-calibrate according to requests for re-calibration received from each user equipment. More specifically, the eNodeB 10 may re-calibrate upon reception of each request for re-calibration. It may also re-calibrate when the number of requests for re-calibration exceeds a predetermined number, for example, the eNodeB may re-calibrate when it receives three new requests for re-calibration. In this way, trade off may be reached between overall receiving performance of the system and the computational load of the eNodeB.

When deciding to update the calibration matrix **E**, the eNodeB 10 determines the downlink vector channel matrix according to the information associated with the downlink vector channel matrix fed back from the user equipment in the space division multiplexing group, combines the downlink vector channel matrix to form an effective downlink channel matrix, and right multiplies the original calibration matrix with the effective downlink channel matrix to obtain an updated calibration matrix. Specifically, the step may be described in the form of matrices: the eNodeB 10 determines a vector channel $\mathbf{H}'_{j,DL} = [h'_{j,1,...,}h'_{j,n_r}]$ fed back from each user equipment, combines the vector channel $\mathrm{H}'_{j,DL}$ together to form an effective downlink channel matrix $\mathbf{H}'_{DL}$, and right multiplies the original calibration matrix with the effective downlink channel matrix to obtain an updated calibration matrix, which is represented by $\mathbf{E}' = \mathbf{E}\mathrm{H}'_{DL}$. Then in step S13, the eNodeB 10 determines a downlink precoding matrix according to the updated calibration information.

In the above embodiment, each user equipment feeds back the vector channel $\mathbf{H}'_{j,DL} = [h'_{j,1,...,} h'_{j,n_r}]$ to guarantee reciprocity of the whole channel matrix and bring performance gain. However, in a case of low SINR, the off-diagonal entries fed back from each user may become inaccurate. This inaccuracy will be propagated to other users in the space division multiplexing group via matrix operation, and cause multi-user interference. Therefore, optionally, step S22 further comprises: the user equipment 20 measuring an SINR and setting entries in the vector channel matrix $\mathbf{H}'_{j,DL} = [h'_{j,1,...,} h'_{j,n_r}]$ irrelevant to the channel of the user equipment 20 to zero. Thus the vector channel matrix is finally determined as $\mathbf{H}'_{j,DL} = [\mathbf{0}, h'_{j,j}, \mathbf{0}]$.

In the above embodiment, each user equipment in the space division multiplexing group is equipped with one antenna each receiving an independent data stream. Such an example is intended to explain the present invention rather than limit it.

A person skilled in the art would understand that each user equipment in the space division multiplexing group may be equipped with two or more antennas each receiving an independent data stream. For example, the user equipment 20 is equipped with two antennas, which are the second and third receiving antennas in the space division multiplexing group, respectively. Therefore, the vector channels measured by the user equipment 20 may be represented as $\mathbf{H}'_{2,DL} = [h'_{2,1,...,}h'_{2,n_r}]$ and $\mathbf{H}'_{3,DL} = [h'_{3,1,...,}h'_{3,n_r}]$. The user equipment 20 also transmits information associated with $\mathbf{H}'_{2,DL}$ and $\mathbf{H}'_{3,DL}$ to the eNodeB 10. A person skilled in the art can derive corresponding operations of other equipments in the system in light of the above description without creative work. Therefore, they are omitted herein.

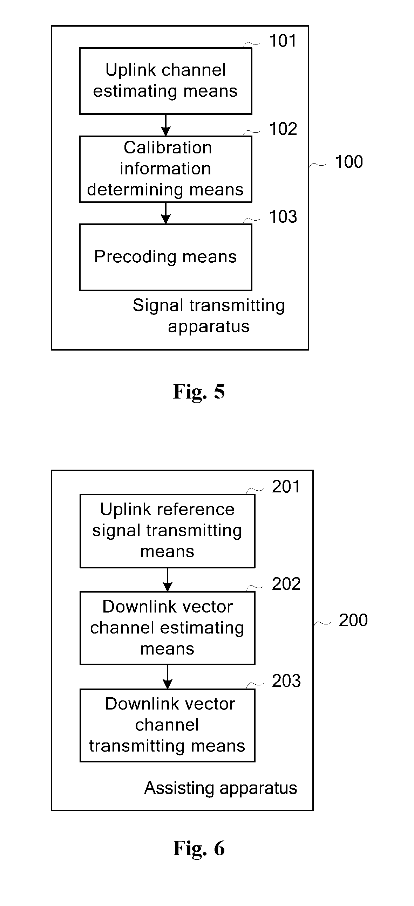

FIG. 5 is a structural block diagram illustrating a signal transmitting apparatus for transmitting a signal in an eNodeB of a TDD MIMO system according to an embodiment of the present invention. FIG. 6 is a structural block diagram illustrating an assisting apparatus for assisting an eNodeB to transmit a signal in a user equipment of a TDD MIMO system according to an embodiment of the present invention. The present invention is described in an apparatus perspective in connection with FIGS. 3-6.

As shown in FIG. 5, a signal transmitting apparatus 100 comprises: an uplink channel estimating means 101, a calibration information determining means 102, and a precoding means 103. The signal transmitting apparatus 100 is typically configured in the eNodeB 10. As shown in FIG. 6, an assisting apparatus 200 comprises: an uplink reference signal transmitting means 201, a downlink vector channel estimating means 202, and a downlink vector channel transmitting means 203. The assisting apparatus 200 is typically configured in the user equipment 20. A third aspect and a fourth aspect of the present invention will be described hereinafter in connection with signal processing operations between the signal transmitting apparatus 100 in the eNodeB 10 and the assisting apparatus 200 in the user equipment 20.

Firstly, at the side of the user equipment, the uplink reference signal transmitting means 201 in the assisting apparatus 200 transmits an uplink reference signal to the eNodeB 10 for uplink channel estimation. Preferably, the transmitted uplink reference signal is a sounding reference signal so that the eNodeB 10 may estimate the uplink channel between itself and the user equipment 20. Accordingly, other user equipments in the same space division multiplexing group perform an identical operation to that of the user equipment 20.

At the side of the eNodeB 10, the uplink channel estimating means 101 in the signal transmitting apparatus 100 receives a signal from a user equipment in a space division multiplexing group, and estimates uplink channel characteristics according to the received signal. Preferably, the uplink channel estimating means 101 estimates a full uplink channel matrix according to signals (e.g., sounding reference signals) from all the user equipments in the space division multiplexing group.

Usually, before receiving a new uplink reference signal from a user equipment (e.g., the user equipment 20), the eNodeB 10 uses an uplink channel matrix estimated according to the last uplink reference signal.

Then, the calibration information determining means 102 determines reciprocity calibration information between the uplink channel characteristics and downlink channel characteristics.

Specifically, the above characteristics and information are expressed in a form of matrix. In other words, the uplink channel characteristics is expressed by an uplink channel matrix $\mathbf{H}_{UL}$, the downlink channel characteristics is expressed by a downlink channel matrix $\mathbf{H}_{DL}$, and the calibration information is expressed by a left multiplier matrix $\mathbf{E}$.

The calibration information, namely calibration matrix, satisfies $\mathbf{H}_{DL} = \mathbf{E}\mathbf{H}_{UL}^{T}$ In the initial stage of communication, the signal transmitting apparatus 100 sets an initial calibration matrix. Preferably, the initial calibration matrix is set to be a unitary diagonal matrix. In the process of communication, the eNodeB 10 updates the calibration matrix according to feedback from user equipments in the space division multiplexing group.

Then, the precoding means103 determines a downlink precoding matrix using zero forcing according to the uplink channel characteristics and the calibration information and transmits a downlink signal to the user equipment in the space division multiplexing group according to the determined downlink precoding matrix.

Specifically, using a matrix expression, the precoding means 103 determines a downlink channel matrix according to an uplink channel matrix and a calibration matrix, which is represented as $\mathbf{H}_{DL} = \mathbf{E}\mathbf{H}_{UL}^{T}$ Then, the precoding means 103 designs precodes using zero forcing according to a calibrated uplink channel matrix to obtain a downlink precoding matrix $\mathbf{W}$, performs precoding according to the downlink precoding matrix $\mathbf{W}$ , and transmits downlink signals to each user equipment in the space division multiplexing group. More specifically, the reference signals transmitted to different user equipments in the space division multiplexing group by the precoding means 103 are mutually orthogonal, and precoding for the reference signals is identical to that for data signals.

The downlink precoding matrix W may be obtained by applying a Moore-Penrose pseudo-inverse to the calibrated uplink channel matrix, which is represented by $\mathbf{W} = (\mathbf{E}\mathbf{H}_{UL}^{T})^{+}$

The downlink precoding matrix $\mathbf{W}$ may also be obtained by performing a minimum mean square estimation to the calibrated uplink channel matrix.

A person skilled in the art would understand that any designs of zero forcing precoding making $\mathbf{H}_{DL}\mathbf{W}$ a diagonal matrix may be employed in the present invention.

At the side of the user equipment, the downlink channel is estimated according to a signal from the eNodeB. The downlink vector channel estimating means 202 of the assisting apparatus 200 in the user equipment 20 receives a downlink reference signal from the eNodeB 10 for downlink channel estimation of a space division multiplexing group to which the user equipment 20 pertains, and estimates a downlink vector channel matrix according to the received downlink reference signal. Specifically, the downlink vector channel estimating means 202 receives and measures downlink reference signals of all users in the space division multiplexing group to which the user equipment 20 pertains to estimate the vector channel. The effective downlink channel matrix seen by all the user equipments of the space division multiplexing group may be represented as

$$\mathbf{H'}_{DL} = \begin{bmatrix} \mathbf{H'}_{1,DL} \\ \cdots \\ \mathbf{H'}_{n_r,DL} \end{bmatrix},$$

where $n_r$ represents total number of receiving antennas, or total number of independent data streams (if each receiving antenna corresponds to an independent data stream). Each row vector in the above effective downlink channel matrix is a vector channel seen in a perspective of a ceitain receiving antenna. For purposes of illustration instead of limitation, each user equipment in the space division multiplexing group is equipped with one antenna for receiving an independent data stream. If the user equipment 20 is the j-th user equipment in the group, the vector channel measured by the user equipment 20 may be represented by $\mathbf{H'}_{j,DL} = [h'_{j,1},...,h'_{j,n_r}]$. Other user equipments in the group perform identical operations to those of the user equipment 20, and measure their respective vector channel.

Then in the user equipment 20, the downlink vector channel transmitting means 203 makes a determination on whether its measured downlink vector channel matrix satisfies a predetermined condition. If the condition is satisfied, the downlink vector channel transmitting means 203 transmits information associated with the estimated downlink vector channel matrix to the eNodeB 10 for channel reciprocity calibration.

Specifically, the j-th user equipment measures the vector channel to be $\mathbf{H'}_{j,DL} = [h'_{j,1},...,h'_{j,n_r}]$ . The condition of the determination may be either that an average power value of $\mathbf{H'}_{j,DL} = [h'_{j,1},...,h'_{j,n_r}]$ exceeds a predetermined valude or that an average of modes of its entries exceeds a predetermined value, meaning that the eNodeB 10 has so great channel calibration errors that signals transmitted to other users in the space division multiplexing group cause apparent interference to the user equipment 20. Therefore, the downlink vector channel transmitting means 203 in the user equipment 20 feeds back the measured vector channel to the eNodeB 10 for channel reciprocity calibration. Optionally, the downlink vector channel transmitting means 203 transmits a request for re-calibration to the eNodeB 10. A person skilled in the art would understand that other predetermined conditions may be used by the downlink vector channel transmitting means 203 to determine whether it feeds back the vector channel and/or transmits the request for re-calibration to the eNodeB 10.

The user equipment 20 may feed back the downlink vector channel matrix $\mathbf{H'}_{j'DL}$ in various manners. For example, the downlink vector channel transmitting means 203 may transmit to the eNodeB 10 an actual measured value of the downlink vector channel matrix. Alternatively, the downlink vector channel transmitting means 203 may transmit to the eNodeB 10 a variation of the downlink vector channel matrix, and the eNodeB 10 derives current vector channel according to the last vector channel and its variation. Alternatively again, the downlink vector channel transmitting means 203 may transmit to the eNodeB 10 a quantized value of the downlink vector channel matrix. Of course, the user equipment 20 may also employ other manners to feed back the calibration information. The dimension of the effective downlink channel matrix $\mathbf{H'}_{DL}$ is limited to the total number of receiving antennas, and is usually less than $n_r \times n_t$ . Therefore, with the same feedback manner, calibration feedback overhead in the present invention is less than that in the 3GPP proposal R1-080494.

Identical operations are performed by other user equipments in the same space division multiplexing group to feed back their respective measured downlink vector channel matrix and/or transmit requests for re-calibration, which is omitted herein.

As mentioned above, the calibration information determining means 102 in the eNodeB 10 determines reciprocity calibration matrix E between the uplink channel matrix and downlink channel matrix. In the process of communication, the calibration information determining means 102 is further configured to receive information associated with a downlink vector channel matrix fed back from the user equipment in the space division multiplexing group, and selectively updates the calibration information according to the information associated with the downlink vector channel matrix.

Specifically, the calibration information determining means 102 determines a corresponding vector channel $\mathbf{H'}_{j'DL} = [h'_{j,1},...,h'_{j,n_r}]$ according to information fed back from each user equipment in the space division multiplexing group; and decides whether to re-calibrate according to requests for re-calibration received from each user equipment. More specifically, the calibration information determining means 102 may re-calibrate upon reception of each request for re-calibration. It may also re-calibrate when the number of requests for re-calibration exceeds a predetermined number, for example, the eNodeB may re-calibrate when it receives three new requests for re-calibration. In this way trade off may be reached between overall receiving performance of the system and the computational load of the eNodeB.

When deciding to update the calibration matrix E , the calibration information determining means 102 determines the downlink vector channel matrix according to the information associated with the downlink vector channel matrix fed back from the user equipment in the space division multiplexing group, combines the downlink vector channel matrix to form an effective downlink channel matrix, and right multiplies the original calibration matrix with the effective downlink channel matrix to obtain an updated calibration matrix. Specifically, the operation may be described in the form of matrices: the calibration information determining means 102 determines a vector channel $\mathbf{H'}_{j,DL} = [h'_{j',1},...,h'_{j,n_r}]$ fed back from each user equipment, combines the vector channel $\mathbf{H'}_{j'DL}$ together to form an effective downlink channel matrix $\mathbf{H'}_{DL}$ , and right multiplies the original calibration matrix with the effective downlink channel matrix to obtain an updated calibration matrix, which is represented by $\mathbf{E'} = \mathbf{E}\mathbf{H'}_{DL}$ . Then the precoding means 103 in the eNodeB 10 determines a downlink precoding matrix according to the updated calibration information.

In the above embodiment, each user equipment feeds back the vector channel $\mathbf{H'}_{j'DL} = [h'_{j,1},...,h'_{j,n_r}]$ to guarantee reciprocity of the whole channel matrix and bring performance gain. However, in a case of low SINR, the off-diagonal entries fed back from each user may become inaccurate. This inaccuracy will be propagated to other users in the space division multiplexing group via matrix operation, and cause multi-user interference. Therefore, optionally, the downlink vector channel estimating means 202 in the user equipment 20 is further configured to measure an SINR and sets entries in the vector channel matrix $\mathbf{H'}_{j,DL} = [h'_{j,1},..., h'_{j,n_r}]$ irrelevant to the channel of the user equipment 20 to zero. Thus the vector channel matrix is finally determined as $\mathbf{H'}_{j,DL} = [0, h'_{j,j}, 0]$ .

In the above embodiment, each user equipment in the space division multiplexing group is equipped with one antenna each receiving an independent data stream. Such an example is intended to explain the present invention rather than limit it.

A person skilled in the art would understand that each user equipment in the space division multiplexing group may be equipped with two or more antennas each receiving an independent data stream. For example, the user equipment 20 is equipped with two antennas, which are the second and third receiving antennas in the space division multiplexing group, respectively. Therefore, the vector channels measured by the downlink vector channel estimating means 202 in the user equipment 20 may be represented as $\mathbf{H'}_{2,DL} = [h'_{2,1},...,h'_{2,n_r}]$ and $\mathbf{H'}_{3,DL} = [h'_{3,1},...,h'_{3,n_r}]$ . The downlink vector channel transmitting means 203 in the user equipment 20 also transmits information associated with $\mathbf{H'}_{2,DL}$ and $\mathbf{H'}_{3,DL}$ to the eNodeB 10. A person skilled in the art can derive corresponding operations of other equipments in the system in light of the above description without creative work. Therefore, they are omitted herein.

A person skilled in the art would understand that the so-called apparatuses or means in the present invention may be implemented with a hardware module, or a software functional module, or even a hardware module integrated with a software functional module.

In prior art (e.g., the 3GPP proposal R1-080494), the triggering of reciprocity calibration depends on many factors such as temperature change, power variation, time escaped since last calibration, etc. To provide precise triggering, the control entity in an eNodeB needs to collect all these information frequently and notify an user equipment once it decides to perform reciprocity calibration. This may need extra circuits, processing efforts, and most importantly waste of air interface resource due to incorrect trigger timing.

In the present invention, the user equipment measures the vector channel $\mathbf{H'}_{j,DL}$ and is capable of promptly measuring its variation when environments change, thereby instantly triggering reciprocity calibration. Therefore, the trigger in the eNodeB has reduced complexity and more accurate triggering timing.

Moreover, in the present invention, what an user equipment feeds back is information associated with the effective downlink channel $\mathbf{H'}_{DL}$ , instead of information associated with straight channel matrix. For a TDD system with perfect reciprocity, the effective channel matrix is a unitary diagonal matrix. And for a TDD system with slight or medium reciprocity errors, variation of entries in the effective downlink channel matrix is less than that of entries in the straight channel matrix. Therefore, the present invention requires less quantization bits.

In addition, neither the eNodeB nor the user equipment needs to perform calibration-specific channel estimations in the present invention.

The non-limiting embodiments of the present invention are described above. However, the present invention is not limited to particular systems, apparatuses and specific protocols. Modifications or variations may be made by a person skilled in the art without departing from the scope of the appended claims.

## Claims

1.   A method of transmitting a signal in an eNodeB of a time division duplexing multiple input multiple output system, the method comprising:

A . receiving a signal from a user equipment in a space division multiplexing group and estimating uplink channel characteristics according to the received signal;

B . determining reciprocity calibration information between the uplink channel characteristics and downlink channel characteristics;

C . determining a downlink precoding matrix using zero forcing according to the uplink channel characteristics and the calibration information, and transmitting a downlink signal to the user equipment in the space division multiplexing group according to the determined downlink precoding matrix;

wherein the step B further comprises receiving information associated with a downlink vector channel matrix fed back from the user terminal in the space division multiplexing group, and selectively updating the calibration information according to the information associated with the downlink vector channel matrix.

2.   The method of claim 1, wherein the calibration information is a calibration matrix and the downlink channel matrix is obtained by right multiplying a transposed matrix of an uplink channel matrix with the calibration matrix.

3.   The method of claim 2, wherein the step B comprises:

determining the downlink vector channel matrix according to the information associated with the downlink vector channel matrix fed back from the user equipment in the space division multiplexing group, combining the downlink vector channel matrix to form an effective downlink channel matrix, and right multiplying the original calibration matrix with the effective downlink channel matrix to obtain an updated calibration matrix.

**4.** The method of claim 3, wherein the step C comprises:

evaluating a Moore-Penrose inverse of a calibrated uplink channel matrix to obtain the downlink precoding matrix.

**5.** The method of claim 3, wherein the step C comprises:

performing a minimum mean square estimation to a calibrated uplink channel matrix to obtain the downlink precoding matrix.

**6.** The method of claim 1, wherein the step B comprises:

receiving requests for re-calibration from the user equipment in the space division multiplexing group; and updating the calibration information when the number of the requests for re-calibration exceeds a predetermined value.

**7.** The method of claim 1 further comprising:

setting initial calibration information.

**8.** A method of assisting an eNodeB to transmit a signal in a user equipment of a time division duplexing multiple input multiple output system, the method comprising:

a . transmitting an uplink reference signal to the eNodeB for uplink channel estimation;
b . receiving a downlink reference signal from the eNodeB for downlink channel estimating of a space division multiplexing group to which the user equipment pertains, and estimating a downlink vector channel matrix according to the received downlink reference signal;
c . transmitting information associated with the estimated downlink vector channel matrix to the eNodeB for channel reciprocity calibration when the downlink vector channel matrix satisfies a predetermined condition.

**9.** The method of claim 8, wherein the step c comprises:

transmitting requests for re-calibration to the eNodeB when the downlink vector channel matrix satisfies the predetermined condition.

**10.** The method of claim 8, wherein the step b comprises:

measuring a signal to interference and noise ratio, and setting entries in the vector channel matrix irrelevant to the channel of the user equipment to zero.

**11.** The method of claim 8 or 9, wherein the predetermined condition is one of:

an average power value of the downlink vector channel matrix exceeding a predetermined value; or
an average value of modes of entries of the downlink vector channel matrix exceeding a predetermined value.

**12.** The method of claim 8, wherein the information associated with the estimated downlink vector channel matrix is one of:

the downlink vector channel matrix; or
a variation of the downlink vector channel matrix; or
a quantized value of the downlink vector channel matrix.

**13.** A signal transmitting apparatus for transmitting a signal in an eNodeB of a time division duplexing multiple input multiple output system, the apparatus comprising:

an uplink channel estimating means for receiving a signal from a user equipment in a space division multiplexing group and estimating uplink channel characteristics according to the received signal;

a calibration information determining means for determining calibration information between the uplink channel characteristics and downlink channel characteristics;

a precoding means for determining a downlink precoding matrix using zero forcing according to the uplink channel characteristics and the calibration information, and transmitting a downlink signal to the user equipment in the space division multiplexing group according to the determined downlink precoding matrix;

wherein the calibration information determining means is further utilized for receiving information associated with a downlink vector channel matrix fed back from the user equipment in the space division multiplexing group, and selectively updating the calibration information according to the information associated with the downlink vector channel matrix.

14. An assisting apparatus for assisting an eNodeB to transmit a signal in a user equipment of a time division duplexing multiple input multiple output system, the apparatus comprising:

an uplink reference signal transmitting means for transmitting an uplink reference signal to the eNodeB for uplink channel estimation;

a downlink vector channel estimating means for receiving a downlink reference signal from the eNodeB for downlink channel estimating by a space division multiplexing group to which the user equipment pertains, and estimating a downlink vector channel matrix according to the received downlink reference signal;

a downlink vector channel transmitting means for transmitting information associated with the estimated downlink vector channel matrix to the eNodeB when the downlink vector channel matrix satisfies a predetermined condition.

**Fig.1**

Fig. 2

**Fig. 3**

**Fig. 4**

**Fig. 5**

**Fig. 6**

<table>
<tr><td colspan="2" align="center">**INTERNATIONAL SEARCH REPORT**</td><td>International application No.<br>PCT/CN2009/072406</td></tr>
</table>

| **A.  CLASSIFICATION OF SUBJECT MATTER** |
| --- |
| see extra sheet<br>According to International Patent Classification (IPC) or to both national classification and IPC |

| **B.    FIELDS SEARCHED** |
| --- |
| Minimum documentation searched (classification system followed by classification symbols)<br><br>IPC: H04B, H04L, H04Q, H04W |
| Documentation searched other than minimum documentation to the extent that such documents are included in the fields searched |
| Electronic data base consulted during the international search (name of data base and, where practicable, search terms used)<br><br>EPODOC, WPI, TXTWO1, CNPAT, CNKI, IEEE: time division duplex, TDD, multiple input, multiple output, MIMO, feedback, calibrate, adjust, precoding, matrix, vector, reciprocal, estimate, channel, space division multiplexing, SDM |

| **C.    DOCUMENTS CONSIDERED TO BE RELEVANT** | | |
| --- | --- | --- |
| Category* | Citation of document, with indication, where appropriate, of the relevant passages | Relevant to claim No. |
| A | CN101341670A (QUALCOMM INC.) 07 Jan. 2009(07.01.2009) the whole document | 1-14 |
| A | CN101222301A (ZTE COMMUNICATION CO., LTD.) 16 Jul. 2008(16.07.2008)<br>the whole document | 1-14 |
| A | CN101291503A (ZHANXUN COMMUNICATION SHANGHAI CO., LTD.)<br>22 Oct. 2008(22.10.2008) the whole document | 1-14 |

| ☐ Further documents are listed in the continuation of Box C. | ☒ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search<br>11 Mar. 2010(11.03.2010) | Date of mailing of the international search report<br>**01 Apr. 2010 (01.04.2010)** |
| --- | --- |
| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br>CHEN, Sheng<br>Telephone No. (86-10)62413515 |

Form PCT/ISA /210 (second sheet) (July 2009)

## INTERNATIONAL SEARCH REPORT
Information on patent family members

| International application No. |
| --- |
| PCT/CN2009/072406 |

| Patent Documents referred in the Report | Publication Date | Patent Family | Publication Date |
| --- | --- | --- | --- |
| CN101341670A | 07.01.2009 | WO2007050860A1 | 03.05.2007 |
|  |  | US2007115909A1 | 24.05.2007 |
|  |  | EP1941633A1 | 09.07.2008 |
|  |  | INDELNP200803519E | 08.08.2008 |
|  |  | KR20080064187A | 08.07.2008 |
|  |  | JP2009514382T | 02.04.2009 |
|  |  | CA2627395A1 | 03.05.2007 |
|  |  | TW200731694A | 16.08.2007 |
| CN101222301A | 16.07.2008 | NONE |  |
| CN101291503A | 22.10.2008 | NONE |  |

Form PCT/ISA /210 (patent family annex) (July 2009)

**INTERNATIONAL SEARCH REPORT**

International application No.

PCT/CN2009/072406

A. **CLASSIFICATION OF SUBJECT MATTER**

H04B 7/04 (2006.01) i

H04W 28/06 (2009.01) i

Form PCT/ISA /210 (extra sheet) (July 2009)